# FASCICULE DE BREVET EUROPEEN

(11) **EP 2 872 382 B1**
(45) Date de publication et mention de la délivrance du brevet: **04.05.2016**
(21) Numéro de dépôt: 13744726.4
(22) Date de dépôt: 10.07.2013
(51) Int. Cl.: B62J 35/00, B62K 11/02

(54) **MOTOCYCLETTE COMPORTANT UNE COQUE AUTOPORTEUSE**
MOTORRAD MIT EINER SELBSTTRAGENDEN VERKLEIDUNG
MOTORCYCLE COMPRISING A SELF SUPPORTING SHELL

(30) Priorité: 13.07.2012 FR 1256793
(43) Date de publication de la demande: 20.05.2015
(73) Titulaire: RDMO, 49100 Angers (FR)
(72) Inventeur: MIDY, Olivier, 49190 Rochefort Sur Loire (FR)
(74) Mandataire: IP Trust
(86) Numéro de dépôt international: PCT/FR2013/051655
(87) Numéro de publication internationale: WO 2014/009661

(56) Documents cités:
- EP-A2- 1 366 975
- FR-A1- 2 905 665
- US-A1- 2006 290 094
- US-B1- 6 484 837

## Description

### Domaine de l'invention

La présente invention concerne le domaine des motocyclettes, et plus particulièrement des motocyclettes comportant une coque autoporteuse.

### Etat de la technique

On connaît dans l'état de la technique une structure de coque exploitée par la motocyclette Marcel GUIGUET MGC 250 N3 BR.

Cette motocyclette présente un cadre coque formé par un réservoir rigide réalisé en fonderie d'aluminium. Ce réservoir présente à sa partie avant une colonne de direction intégrée, et à sa partie arrière une excroissance supportant la selle. Cette motocyclette de l'art antérieur comprend une deuxième coque inférieure supportant le moteur et la boîte de vitesse séparée ainsi qu'un élément de couplage des freins avant et arrière, l'axe de la roue arrière et un réservoir d'huile. Les deux coques sont reliés par sept tirants en acier matricé, deux formant un double berceau avant, un central deux à l'arrière du moteur et deux reliés à l'axe de la roue arrière.

On connaît également la motocyclette BUELL FIREBOLT XB9R divulguant une structure de châssis à double-poutre comportant une colonne de direction et une liaison avec le bras oscillant ainsi que des moyens d'accrochage du moteur. Les deux poutres sont creuses pour servir de réservoir d'essence. Le brevet US6484837 et le brevet US7690467 décrivent un châssis à double bras latéraux creux, contenant de l'essence, reliant l'axe de bras oscillant à la colonne de direction.

On connaît également la motocyclette KAWASKI KR500 présentant une coque chaudronnée intégrant une colonne de direction et des moyens d'accrochage du moteur et du bras oscillant. Cette coque sert de réservoir d'essence. Une assise est soudée sur cette coque.

### Problème objectif de l'art antérieur

Les solutions de l'art antérieur présentent plusieurs problèmes techniques.

La solution proposée par MGC implique un grand nombre de pièces rapportées, notamment deux coques et une dizaine de tirants, ce qui se traduit non seulement par un coût de fabrication et d'assemblage élevé, mais aussi des risques de défaillances.

Surtout, cette architecture n'est pas adaptée à des motocyclettes à suspension arrière oscillant, car l'un des châssis s'étend jusqu'à la roue arrière.

Les autres solutions nécessitent également le recours à des pièces multiples.

En particulier, les solutions proposées par les brevet américains brevet US6484837 et le brevet US7690467 présentent un élément de châssis formé de deux bras creux et reliant la colonne de direction à l'axe du bras oscillant. Ce châssis creux nécessite des pièces additionnelles tels que l'assise du pilote et son habillage, ainsi qu'un habillage ou élément de carrosserie supérieur contenant la boîte à air.

Cet assemblage de pièces additionnelles se traduit par un coût d'assemblage et de maintenance, et ne permet pas d'optimiser le volume du réservoir.

### Solution apportée par l'invention

L'objet de la présente invention est de remédier aux problèmes de l'art antérieur par une solution fortement intégrée, avec un nombre de pièces de structure très réduit tout en assurant une rigidité élevée et une esthétique plaisante.

A cet effet, l'invention concerne selon son acception la plus générale une motocyclette comportant une coque autoporteuse creuse intégrant la colonne de direction, des moyens d'accrochage du moteur, des moyens d'accrochage du système de suspension, ladite coque présentant un volume intérieur formant réservoir d'essence, ladite coque intégrant en outre l'assise du pilote. Ladite coque présente des volumes creux fermés de part et d'autre du plan longitudinal vertical médian. L'assise du pilote est de préférence constituée par un prolongement des volumes creux.

Les deux volumes creux fermés s'étendent de part et d'autre du plan longitudinal vertical médian et leurs enveloppes définissent les poutres latérales

De préférence, lesdits volumes creux fermés constituent le réservoir d'essence et s'étendent longitudinalement sur 85% au moins de la longueur de ladite coque autoporteuse.

Ces volumes creux s'étendent notamment jusqu'à l'assise du pilote.

De préférence, ladite coque présente en outre au moins un volume creux transversal communiquant avec lesdits volumes creux longitudinaux ; lesdits volumes creux longitudinaux sont reliés par un volume creux.

Avantageusement, ladite coque présente deux bras latéraux creux délimitant une zone médiane évidée ouverte sur la face inférieure.

Selon une variante, ladite zone médiane évidée s'ouvre sur la face supérieure et sur la face inférieure pour former un accès au moteur.

Selon un mode de réalisation particulier, ladite coque présente un moyen escamotable logé dans l'ouverture supérieure de ladite zone médiane évidée.

Selon un autre mode de réalisation, le moteur est supporté par ladite coque autoporteuse par deux platines.

Selon une autre variante, lesdites platines présentent en outre un moyen d'accrochage du bras oscillant supportant la roue arrière.

Avantageusement, lesdites platines présentent une forme arquée, avec au moins deux points d'accroche sur ladite coque et au moins deux points d'accroche du moteur, l'un au moins des points d'accroche de la platine sur la coque étant situé en avant du vilebrequin du moteur.

Selon un premier mode de réalisation, ladite coque est constituée par un bloc coulé en alliage léger.

Selon un deuxième mode de réalisation, ladite coque est constituée par un bloc en carbone.

Selon une variante préféré, la motocyclette comporte deux platines de liaison latérales reliant chacune ladite coque à l'axe avant du bras oscillant, la coque présentant à sa partie inférieure arrière une concavité libérant l'espace pour loger la culasse arrière du moteur.

De préférence, la coque est configurée de sorte que le plan passant par le fond de ladite coque forme un angle supérieur à 20° par rapport au plan transversal passant par la colonne de direction et l'axe du bras oscillant.

Avantageusement, la coque est configurée pour ne pas déborder dans sa partie inférieure un plan transversal horizontal passant au dessus de l'axe d'articulation du bras oscillant et en dessous de la colonne de direction.

### Description détaillée d'exemples non limitatifs de réalisation

D'autres objets et avantages de l'invention apparaîtront au cours de la description qui suit, faite en référence aux dessins annexés, dans lesquels :
- la figure 1 représente une vue d'une motocyclette selon l'invention en perspective avec une découpe partielle de la zone avant gauche de la coque

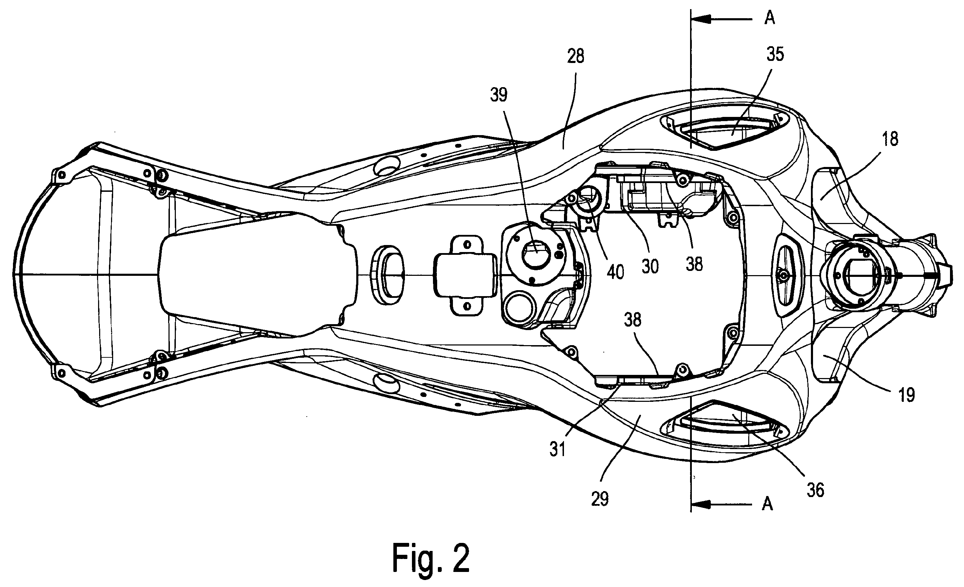

- la figure 2 représente une vue en détail de la coque en vue de dessus

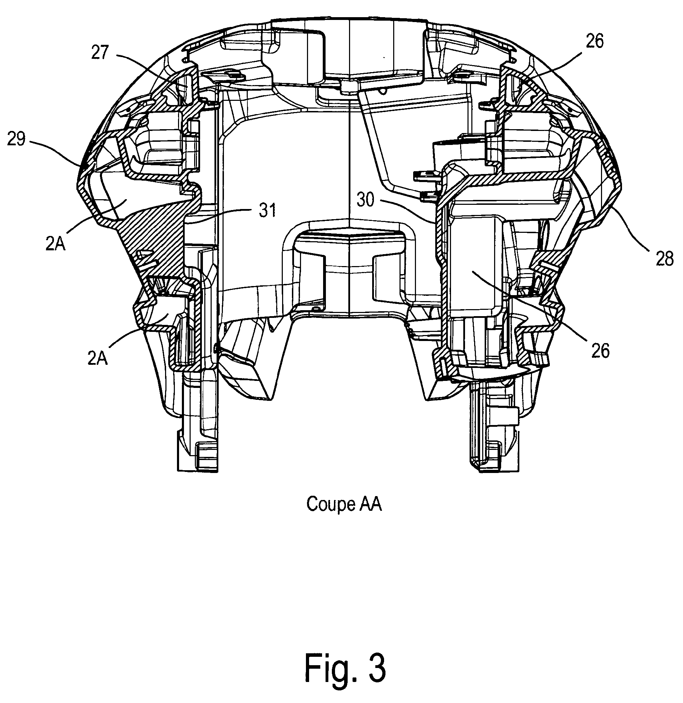

- la figure 3 représente une vue en détail de la coque en vue de section transversale selon un plan de coupe vertical AA.

### Description détaillée d'un exemple de réalisation.

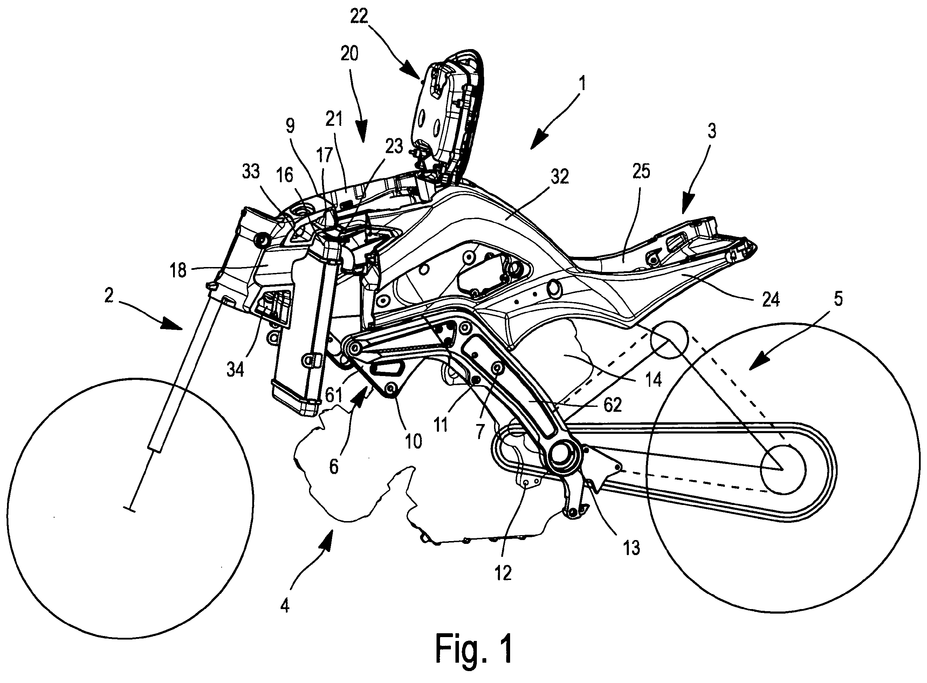

La figure 1 représente une vue d'ensemble d'une motocyclette selon l'invention. L'architecture est basée sur une coque autoporteuse (1) assurant les fonctions de châssis et de carrosserie. La motocyclette ne comporte aucune poutre ou châssis additionnel assurant une liaison mécanique directe entre la colonne de direction d'une part, et le moteur ou le bras oscillant d'autre part. La coque (1) apporte toutes les performances de rigidité et de géométrie de la motocyclette. De même, la coque autoporteuse forme directement la carrosserie extérieure visible (au même titre que le réservoir habituel d'une motocyclette), et reçoit les cas échéant des éléments d'habillage extérieur tels que grippe-genou.

Cette coque (1) est une pièce de fonderie unique et monolithique réalisée par coulage d'aluminium, d'alliage d'aluminium ou de magnésium ou encore en carbone.

La coque (1) présente à sa partie avant une excroissance (2) constituant la colonne de direction. Cette excroissance (2) présente une forme tubulaire, recevant les pallier de direction. Cette excroissance (2) est intégrée à la coque (1) et ne constitue pas une pièce rapportée ni soudée.

La forme générale de la coque (1) est celle d'un réservoir de motocyclette, s'étendant longitudinalement et se prolongeant à l'arrière par une zone (3) formant l'assise du pilote.

Le fond de la coque est délimité par un plan (64) sensiblement horizontal, s'étendant au-dessus de l'axe (63) de pivotement du bras oscillant. Le plan (64) est défini par le plan passant par les zones les plus basses de la coque.

Le moteur (4) et le bras oscillant (5) sont reliés entre eux d'une part et à la coque (1) d'autre part, par des platines (6) fixées de part et d'autre de la coque (1).

Chacune des platines (6) est formée par une pièce en alliage d'aluminium généralement plane en forme de crosse. Elles présentent dans l'exemple décrit trois trous de fixation (7, 8, 9) pour la liaison avec la coque (1). La platine (6) présente également trois trous de fixation (10, 11 et 12) pour l'accrochage du moteur (4).

La platine présente également un bossage (13) pour recevoir l'axe du bras oscillant (5). L'axe de bras oscillant (5) forme un quatrième point de fixation du moteur.

Le moteur (4) est dans l'exemple décrit un moteur bicylindre incliné avec un angle d'environ 25° par rapport à l'axe horizontal. La coque (1) est configurée pour dégager l'espace (14) correspondant au cylindre arrière.

Dans l'exemple décrit, la platine (6) est constitué de deux parties (61, 62) réunies par vissage. Cette configuration permet de simplifier le montage et la maintenance de l'ensemble, en permettant de démonter la partie avant (61) de la platine (6) pour des interventions telles que le nettoyage du filtre de la pompe à essence ou le remplacement de la pompe à essence logée derrière cette partie de la platine (6).

La motocyclette comprend un radiateur (15) pour le refroidissement du moteur. Ce radiateur (15) est orienté selon sa plus grande longueur selon le sens de la hauteur. La partie supérieure (16) est placée en arrière de la colonne de direction (2). La coque présente un évidemment (17) permettant l'engagement de la partie supérieure (16) du radiateur.

La partie avant de la coque (1) présente par ailleurs deux ouvertures (18, 19) de part et d'autre de la colonne de direction (2), pour l'entrée d'air débouchant sur le radiateur principal (15).

La partie supérieure (20) de la coque (1) présente une ouverture (21) obturable par une trappe basculante (22). Cette trappe (22) supporte par ailleurs l'instrumentation de tableau de bord. L'ouverture de la trappe donne accès au bouchon (23) du radiateur, pour permettre le remplissage du radiateur (15). Cette ouverture permet plus généralement une accessibilité aux organes mécaniques du moteur (4).

L'assise (3) est formé par deux prolongements creux (24, 25) formant une poutre en « U », destinés à recevoir une selle.

La coque présente deux volumes creux (26, 27) s'étendant de part et d'autre du plan vertical médian, depuis la colonne de direction (2) jusqu'au niveau de l'assise (3). Ces deux volumes creux sont délimités par les flancs extérieurs (28, 29) de la coque et des parois intérieures (30, 31). Ces volumes creux (26, 27) sont reliés par un volume creux transversal arrière (32) situé en avant de l'assise (3) et par des volumes creux transversaux avant supérieur et inférieur (33, 34) en arrière de la colonne de direction (2). Ces volumes creux (26, 27 ; 32, 33, 34) forme le réservoir d'essence.

Le remplissage d'essence est fait à travers un orifice de remplissage (39) relié par une excroissance du volume creux longitudinal gauche (26). Ce volume creux (26) comporte par ailleurs un logement (40) pour recevoir une jauge à essence.

La coque (1) présente également des entrées d'air moteur (35, 36) latérale débouchant dans chacune un volume intérieur creux transversal traversant les volumes creux respectivement (26, 27), et débouchant à l'intérieur de la coque (1) par des bouches d'air (37, 38).

## Revendications

1. Motocyclette comportant une coque autoporteuse (1) creuse intégrant la colonne de direction (2), des moyens d'accrochage du moteur, des moyens d'accrochage du système de suspension, ladite coque (1) présentant un volume intérieur formant réservoir d'essence, et présentant deux volumes creux (26,27) s'étendant de part et d'autre du plan longitudinal vertical médian, l'enveloppe desdits volumes creux définissant les poutres latérales, **caractérisée en ce que** ladite coque (1) intègre en outre l'assise (3) du pilote.

2. Motocyclette selon la revendication principale **caractérisée en ce que** lesdits volumes creux constituent le réservoir d'essence et s'étendent longitudinalement sur 85% au moins de la longueur de ladite coque autoporteuse (1) incluant ladite assise du pilote.

3. Motocyclette selon l'une quelconque des revendications précédentes **caractérisée en ce que** ladite coque (1) présente en outre au moins un volume creux transversal communiquant avec lesdits volumes creux longitudinaux.

4. Motocyclette selon l'une quelconque des revendications précédentes **caractérisée en ce que** ladite coques (1) présente deux bras latéraux creux délimitant une zone médiane évidée ouverte sur la face inférieure.

5. Motocyclette selon la revendication précédente **caractérisée en ce que** ladite zone médiane évidée s'ouvre sur la face supérieure et sur la face inférieure pour former un accès au moteur (4).

6. Motocyclette selon la revendication précédente **caractérisée en ce que** ladite coque (1) présente un moyen escamotable logée dans l'ouverture supérieure de ladite zone médiane évidée.

7. Motocyclette selon l'une quelconque des revendications précédentes **caractérisée en ce que** le moteur (4) est supporté par ladite coque autoporteuse (1) par deux platines (6).

8. Motocyclette selon la revendication précédente **caractérisée en ce que** lesdites platines (6) présentent en outre un moyen d'accrochage du bras oscillant (5) supportant la roue arrière.

9. Motocyclette selon la revendication précédente **caractérisée en ce que** lesdites platines (6) présentent une forme arquée, avec au moins deux points d'accroche sur ladite coque (1) et au moins deux points d'accroche du moteur (4), l'un au moins des points d'accroche de la platine sur la coque étant situé en avant du vilebrequin du moteur.

10. Motocyclette selon l'une quelconque des revendications précédentes **caractérisée en ce que** ladite coque (1) est constituée par un bloc coulé en alliage léger.

11. Motocyclette selon l'une quelconque des revendications 1 à 9 **caractérisée en ce que** ladite coque (1) est constituée par un bloc en carbone.

12. Motocyclette selon l'une quelconque des revendications précédentes **caractérisée en ce qu'**elle comporte deux platines de liaison latérales (6) reliant chacune ladite coque à l'axe avant du bras oscillant (5), la coque (1) présentant à sa partie inférieure arrière une concavité libérant l'espace (14) pour loger la culasse arrière du moteur.

13. Motocyclette selon l'une quelconque des revendications précédentes **caractérisée en ce que** la coque (1) est configurée de sorte que le plan passant par le fond de ladite coque forme un angle supérieur à 20° par rapport au plan transversal passant par la colonne de direction (2) et l'axe du bras oscillant.

14. Motocyclette selon l'une quelconque des revendications précédentes **caractérisée en ce que** la coque (1) est configurée pour ne pas déborder dans sa partie inférieure un plan transversal horizontal passant au-dessus de l'axe d'articulation du bras oscillant (5) et en dessous de la colonne de direction (2).

## Patentansprüche

1. Motorrad mit einer hohlen Rohbaustruktur (1) mit Lenksäule (2), Befestigungsvorrichtungen für den Motor und Befestigungsvorrichtungen für die Aufhängung, wobei besagte Rohbaustruktur (1) ein Innenvolumen aufweist, das einen Kraftstofftank bildet, sowie zwei Hohlräume (26,27), die sich zu beiden Seiten der senkrechten Längsmittelebene erstrecken, und die besagte Außenhaut besagter Hohlräume seitliche Träger abgrenzt, **dadurch gekennzeichnet, dass** besagte Rohbaustruktur (1) des Weiteren einen Fahrersitz aufweist.

2. Motorrad nach dem Hauptanspruch, **dadurch gekennzeichnet, dass** besagte Hohlräume den Kraftstofftank bilden und sich längs über mindestens 85% der Länge der besagten Rohbaustruktur (1) mit besagtem Fahrersitz erstrecken.

3. Motorrad nach einem der vorhergehenden Ansprüche, **dadurch gekennzeichnet, dass** besagte Rohbaustruktur (1) des Weiteren mindestens einen quer verlaufenden Hohlraum aufweist, der mit den längs verlaufenden Hohlräumen verbunden ist.

4. Motorrad nach einem der vorhergehenden Ansprüche, **dadurch gekennzeichnet, dass** besagte Rohbaustruktur (1) zwei hohle Seitenarme aufweist, die einen ausgesparten Mittelbereich abgrenzen, der an der Unterseite offen ist.

5. Motorrad nach dem vorhergehenden Anspruch, **dadurch gekennzeichnet, dass** sich besagter ausgesparter Mittelbereich nach oben und nach unten hin öffnet, um den Zugang zum Motor (4) zu bilden.

6. Motorrad nach dem vorhergehenden Anspruch, **dadurch gekennzeichnet, dass** besagte Rohbaustruktur (1) eine ausziehbare Vorrichtung aufweist, die in der oberen Öffnung des besagten ausgesparten Mittelbereichs aufliegt.

7. Motorrad nach einem der vorhergehenden Ansprüche, **dadurch gekennzeichnet, dass** der Motor (4) von besagter Rohbaustruktur (1) mittels zweier Platten (6) gestützt wird.

8. Motorrad nach dem vorhergehenden Anspruch, **dadurch gekennzeichnet, dass** die besagten Platten (6) des Weiteren eine Befestigungsvorrichtung für die Schwinge (5) aufweisen, welche des Hinterrad stützt.

9. Motorrad nach dem vorhergehenden Anspruch, **dadurch gekennzeichnet, dass** die besagten Platten (6) bogenförmig sind, und mindestens zwei Verankerungspunkte für besagte Rohbaustruktur (1) und mindestens zwei Verankerungspunkten für den Motor (4) aufweisen, wobei mindestens einer der Verankerungspunkte der Platte auf der Rohbaustruktur vor der Kurbelwelle des Motors liegt.

10. Motorrad nach einem der vorhergehenden Ansprüche, **dadurch gekennzeichnet, dass** besagte Rohbaustruktur (1) aus einem Stück besteht, das aus Leichtlegierung gegossen wurde.

11. Motorrad nach einem der Ansprüche 1 bis 9, **dadurch gekennzeichnet, dass** besagte Rohbaustruktur (1) aus einem Kohlenstoffstück besteht.

12. Motorrad nach einem der vorhergehenden Ansprüche, **dadurch gekennzeichnet, dass** es zwei seitliche Verbindungsplatten (6) aufweist, welche jede der Rohbaustrukturen mit der Vorderachse der Schwinge (5) verbindet, wobei die Rohbaustruktur (1) im unteren hinteren Bereich eine Höhlung aufweist, in welcher der hintere Zylinderkopf aufgenommen wird.

13. Motorrad nach einem der vorhergehenden Ansprüche, **dadurch gekennzeichnet, dass** die Rohbaustruktur (1) so gestaltet ist, dass die Ebene, welche den Boden besagter Rohbaustruktur durchläuft, in Bezug auf die Querebene, welche durch die Lenksäule (2) und die Schwingenachse verläuft, einen Winkel größer 20° bildet.

14. Motorrad nach einem der vorhergehenden Ansprüche, **dadurch gekennzeichnet, dass** die Rohbaustruktur (1) so gestaltet ist, dass sie im unteren Bereich nicht über eine horizontale Querebene hinausragt, die oberhalb der Gelenkachse der Schwinge (5) und unterhalb der Lenksäule (2) verläuft.

## Claims

1. A motorcycle comprising a hollow self-supporting shell (1) integrating the steering column (2), means for securing the engine and means for securing the suspension system, said shell (1) having an inner space forming a petrol tank, and having two hollow spaces (26, 27) extending on either side of the median longitudinal vertical plane, the casing of said hollow spaces defining the side beams, **characterised in that** said shell (1) also integrates the driver's seat (3).

2. A motorcycle according to claim 1, **characterised in that** said hollow spaces constitute the petrol tank and extend longitudinally over at least 85% of the length of said self-supporting shell (1) including said driver's seat.

3. A motorcycle according to any one of the preceding claims, **characterised in that** said shell (1) also has at least one transverse hollow space communicating with said longitudinal hollow spaces.

4. A motorcycle according to any one of the preceding claims, **characterised in that** said shell (1) has two hollow side arms defining a recessed median area which is open on the bottom surface thereof.

5. A motorcycle according to the preceding claim, **characterised in that** said recessed median area is open on the top surface and on the bottom surface thereof such as to form an access to the engine (4).

6. A motorcycle according to the preceding claim, **characterised in that** said shell (1) has a retractable means inserted in the top opening of said recessed median area.

7. A motorcycle according to any one of the preceding claims, **characterised in that** the engine (4) is supported by said self-supporting shell (1) by two plates (6).

8. A motorcycle according to the preceding claim, **characterised in that** said plates (6) also have a means for securing the swing arm (5) supporting the rear wheel.

9. A motorcycle according to the preceding claim, **characterised in that** said plates (6) have an arched shape, with at least two points for securing to said shell (1) and at least two points for securing the engine (4), at least one of the points for attaching the plate to the shell being located in front of the engine crankshaft.

10. A motorcycle according to any one of the preceding claims, **characterised in that** said shell (1) is made up of a block cast from a light alloy.

11. A motorcycle according to any one of claims 1 to 9, **characterised in that** said shell (1) is made up of a carbon block.

12. A motorcycle according to any one of the preceding claims, **characterised in that** it comprises two side linking plates (6) each connecting said shell to the front swing arm (5) centre, the shell (1) having in the rear lower portion thereof a concave section freeing up the space (14) to house the rear cylinder head of the engine.

13. A motorcycle according to any one of the preceding claims, **characterised in that** the shell (1) is configured such that the plane passing through the bottom of said shell forms an angle of more than 20° relative to the transverse plane passing through the steering column (2) and the swing arm centre.

14. A motorcycle according to any one of the preceding claims, **characterised in that** the shell (1) is configured such that the lower portion thereof does not exceed a horizontal transverse plane passing over the hinge pin of the swing arm (5) and under the steering column (2).
